# EUROPEAN PATENT SPECIFICATION

(11) **EP 2 889 560 B1**
(45) Date of publication and mention of the grant of the patent: **09.11.2022**
(21) Application number: 12883123.7
(22) Date of filing: 23.08.2012
(51) Int. Cl.: F25B 49/02, F25B 1/00, F25B 7/00

(54) **REFRIGERATING DEVICE**
KÜHLVORRICHTUNG
DISPOSITIF DE RÉFRIGÉRATION

(43) Date of publication of application: 01.07.2015
(73) Proprietor: Mitsubishi Electric Corporation, Tokyo 100-8310 (JP)
(72) Inventor: SUGIMOTO, Takeshi, Tokyo 100-8310 (JP); IKEDA, Takashi, Tokyo 100-8310 (JP)
(74) Representative: Pfenning, Meinig & Partner mbB
(86) International application number: PCT/JP2012/071265
(87) International publication number: WO 2014/030237

(56) References cited:
- EP-A2- 2 261 570
- WO-A1-2012/002248
- WO-A1-2012/002248
- JP-A- H05 142 294
- JP-A- H05 142 294
- JP-A- 2000 205 672
- JP-A- 2000 205 672
- JP-A- 2007 218 460
- JP-A- 2007 218 460

## Description

### Technical Field

The present invention relates to a refrigeration apparatus having two refrigeration cycles.

### Background Art

A refrigeration apparatus has conventionally been known which performs a dual refrigeration cycle by connecting a high temperature side refrigerant circuit (high temperature side refrigeration cycle) and a low temperature side refrigerant circuit (low temperature side refrigeration cycle) to each other in a cascade configuration via a cascade condenser. A well-known refrigeration apparatus of this type uses carbon dioxide (CO₂) as a refrigerant which circulates in the low temperature side refrigerant circuit and R22 as a refrigerant which circulates in the high temperature side refrigerant circuit, and controls the high temperature side refrigerant circuit and the low temperature side refrigerant circuit by one controller (general-purpose microcomputer) (see, for example, Patent Literature 1).

### Citation List

### Patent Literature

Patent Literature 1: Japanese Unexamined Patent Application Publication No. 2004-190917 (page 14, Fig. 1)

### Summary of Invention

### Technical Problem

In the refrigeration apparatus described in Patent Literature 1, CO₂ is used for the low temperature side refrigerant circuit to achieve a low GWP while R22 is used for the high temperature side refrigerant circuit, and the low temperature side refrigerant circuit and the high temperature side refrigerant circuit are controlled by one controller. It is a common practice to input, to the controller, the respective types of information output from seven sensors including temperature sensors and pressure sensors (the evaporator inlet temperature and outlet temperature of a high temperature side evaporator, the temperature in a refrigerator, the inlet temperature of a low temperature side evaporator, the outside air temperature, the high-side pressure of a low temperature side compressor, and the low-side pressure of a low temperature side compressor). The controller controls eight driving components, namely, a high temperature side compressor, a low temperature side compressor, a high temperature side expansion valve, a low temperature side expansion valve, a low temperature side solenoid valve, a high temperature side fan, a low temperature side fan and an electric heater.

As a consequence, a large controller board or a general-purpose microcomputer which needs 15 input and output terminals must be mounted. This increases the size of the controller, and, in turn, increases the size of the refrigeration apparatus itself. As the controller and the refrigeration apparatus become large, they naturally cost more.

EP 2 261 570 A2 refers to a refrigerating apparatus. The refrigerating apparatus includes a first refrigeration cycle circuit having a first compressor, a first radiator, a supercooler, a first pressure-reducing device and an evaporator that are connected through a refrigerant pipe, a second refrigerant cycle circuit having a second compressor, a second radiator, a second pressure-reducing device and the supercooler that are connected though a refrigerant pipe, a refrigeration unit in which the first compressor and the first radiator are mounted, a showcase in which the first pressure-reducing device and the evaporator are mounted, a supercooling hot water supply device in which the second compressor, the second radiator, the second pressure-reducing device and the supercooler are mounted, and a hot-water stock device having a hot water supply tank that is connected to the second radiator of the supercooling hot water supply device through a second radiator.

JP 2000 205672 A refers to a refrigerating system, according to which the response of a temperature control is improved, wherein a plurality of cold storage units are connected to a heat source unit. According to this document, a high temperature side refrigerant circuit and a plurality of low temperature side refrigerant circuits are arranged. Then a load of an evaporator in a first show case unit exceeds a specified high load, inverter frequency of a first low temperature side compressor of the first low temperature side refrigerant circuit is raised to increase the circulation of a refrigerant of the first low temperature side refrigerant circuit. In this process, to prevent a high temperature side refrigerant circuit from running short of the capacity, the inverter frequency of a second low temperature side compressor is lowered in a second low temperature side refrigerant circuit with small loads of the evaporators.

WO 2012/002248 A1 refers to a refrigeration apparatus, wherein hot water can be supplied by effectively using waste heat generated when a food or the like is cooled, and the cooling capacity and the cooling efficiency can be improved. A supercooling device for supercooling refrigerant introduced from the intermediate receiver to the second decompressor is provided in a first refrigeration cycle circuit provided with a first decompressor, an intermediate pressure receiver, and a second decompressor, wherein refrigerant within the intermediate pressure receiver is introduced to a first compressor during a compression process. The refrigerant in the first refrigeration cycle circuit is supercooled by the evaporation of refrigerant in a second refrigeration cycle circuit in the supercooling device, and water to be supplied is heated by a heat release action of the refrigerant in a second heat release device of the second refrigeration cycle circuit. The refrigerant in the first refrigeration cycle circuit is supercooled by the second refrigeration cycle circuit, and accordingly, the cooling capacity and the cooling efficiency of the first refrigeration cycle can be improved, and hot water can be supplied by effectively using waste heat generated when the refrigerant is supercooled.

The present invention has been made to overcome the above-described problem, and has as its object to provide a refrigeration apparatus which performs a dual refrigeration cycle while keeping its size and cost as small and low as possible. Solution to Problem

A refrigeration apparatus according to the present invention includes at least two refrigerant circuits each including a compressor, a condenser, an expansion valve and an evaporator, which are connected to each other by pipes, and controller boards which are individually provided in separate housings and control the respective refrigerant circuits. The controller boards have the same configuration and are connected to each other by a transmission line.

A refrigeration apparatus according to the present invention includes a high temperature side refrigerant circuit in which a high temperature side compressor, a high temperature side condenser, a high temperature side expansion valve and a high temperature side evaporator are connected to each other by pipes, a low temperature side refrigerant circuit in which a low temperature side compressor, an intermediate cooler, a low temperature side condenser, a liquid pipe solenoid valve, a low temperature side expansion valve and a low temperature side evaporator are connected to each other by pipes, a high temperature side refrigerant circuit controller board that controls at least an operation of a high temperature side fan which supplies air to the high temperature side compressor, the high temperature side expansion valve, and the high temperature side condenser, and a low temperature side refrigerant circuit controller board that controls at least an operation of a low temperature side fan which supplies air to the low temperature side compressor, the low temperature side expansion valve, and the intermediate cooler, wherein the high temperature side refrigerant circuit controller board is connected to a high temperature side, high-side pressure sensor, a high temperature side, discharge gas temperature sensor, and a high temperature side, low-side pressure sensor, the low temperature side refrigerant circuit controller board is connected to a low temperature side, high-side pressure sensor, a low temperature side, discharge gas temperature sensor, and a low temperature side, low-side pressure sensor, the high temperature side compressor, the high temperature side condenser, the high temperature side expansion valve, the high temperature side fan and the high temperature side refrigerant circuit controller board are disposed in a high temperature side housing, the low temperature side compressor, the low temperature side fan and the low temperature side refrigerant circuit controller board are disposed in a low temperature side housing, the liquid pipe solenoid valve, the low temperature side expansion valve and the low temperature side evaporator are disposed in a load side device, and the high temperature side refrigerant circuit controller board and the low temperature side refrigerant circuit controller board have the same configuration and are connected to each other by a transmission line.

### Advantageous Effects of Invention

With the refrigeration apparatus according to the present invention, each controller board can share the temperature and pressure information of each portion by transmission, and appropriately adjust the rotation speed and the opening degree of the compressor, the expansion valve and the fan, which are components of each refrigerant circuit based on the temperature and pressure information of each portion of the respective refrigerant circuits, thereby achieving a compact controller board and a generally-allowable cost.

### Brief Description of Drawings

[Fig. 1] Fig. 1 is a refrigerant circuit diagram which schematically shows an exemplary refrigerant circuit configuration of a refrigeration apparatus according to Embodiment of the present invention.
[Fig. 2] Fig. 2 is an internal perspective view which schematically shows an example of an exemplary internal configuration of an outdoor unit which forms the refrigeration apparatus according to Embodiment of the present invention.
[Fig. 3] Fig. 3 is a refrigeration cycle state diagram which shows an exemplary refrigeration cycle state of the refrigeration apparatus according to Embodiment of the present invention.

### Description of Embodiments

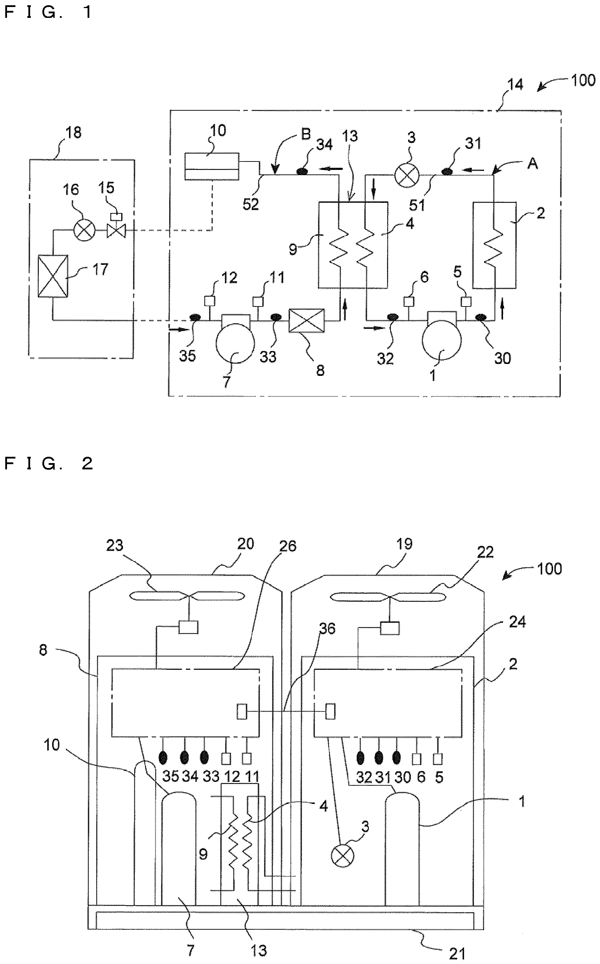

Embodiment of the present invention will be described below with reference to the accompanying drawings. In the drawings including Fig. 1, the relationships of size between components may be different from the actual relationships. Also, in the drawings including Fig. 1, the same reference numerals denote the same or equivalent components, and the same applies to the entire specification. Further, the modes of the components described in the entire specification are merely examples, and the present invention is not limited thereto.

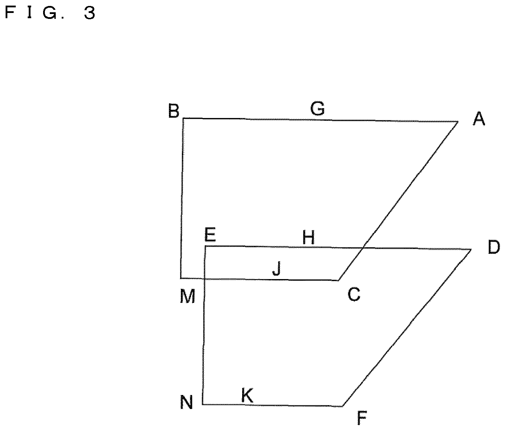

Fig. 1 is a refrigerant circuit diagram which schematically shows an exemplary refrigerant circuit configuration of a refrigeration apparatus 100 according to Embodiment of the present invention. Fig. 2 is an internal perspective view which schematically shows an example of an exemplary internal configuration of an outdoor unit 14 which forms the refrigeration apparatus 100. Fig. 3 is a refrigeration cycle state diagram which shows an exemplary refrigeration cycle state of the refrigeration apparatus 100. The configuration and operation of the refrigeration apparatus 100 will be described with reference to Figs. 1 to 3. The refrigeration apparatus 100 includes a low temperature side refrigerant circuit and a high temperature side refrigerant circuit and performs a dual refrigeration cycle.

### [Configuration]

As shown in Fig. 1, the refrigeration apparatus 100 includes a high temperature side refrigerant circuit A and a low temperature side refrigerant circuit (load side circuit) B, each of which is configured to circulate a refrigerant to perform a dual refrigeration cycle. That is, the refrigeration apparatus 100 is configured to perform a dual refrigeration cycle by connecting the high temperature side refrigerant circuit A and the low temperature side refrigerant circuit B to each other in a cascade configuration via a common cascade condenser 13. In the following description, the high temperature side refrigerant circuit A will be referred to as the "high temperature side circuit A", and the low temperature side refrigerant circuit B will be referred to as the "low temperature side circuit B".

### (High temperature side circuit A)

The high temperature side circuit A includes a high temperature side compressor 1, a high temperature side condenser 2, a high temperature side expansion valve 3 and a high temperature side evaporator 4, which are connected in series to each other by high temperature side refrigerant pipes 51. The high temperature side circuit A also includes a high temperature side, high-side pressure sensor 5, a high temperature side, discharge gas temperature sensor 30, a high temperature side, condenser outlet temperature sensor 31, a high temperature side, low-side pressure sensor 6 and a high temperature side, suction gas temperature sensor 32.

Examples of the refrigerant which circulates in the high temperature side circuit A include a HFC (hydrofluorocarbon) refrigerant, a HFO (hydrofluoroolefin) refrigerant and a HC (hydrocarbon) refrigerant. The HFC refrigerant is typically R410A but may be R404A, R32, or R407C. Embodiment will be described by taking as an example the use of R410A, which is a representative of the HFC refrigerant, as the refrigerant which circulates in the high temperature side circuit A.

The high temperature side compressor 1 is configured to draw by suction the refrigerant which flows in the high temperature side circuit A, and compress the refrigerant to a high-temperature, high-pressure state. The high temperature side condenser 2 is configured to exchange heat between the refrigerant discharged from the high temperature side compressor 1 and a fluid (for example, the air, water, a refrigerant or brine) and apply heating energy to the fluid. The high temperature side expansion valve 3 is configured to decompress and expand the refrigerant flowing out of the high temperature side condenser 2. The high temperature side evaporator 4 is configured to exchange heat between the refrigerant decompressed by the high temperature side expansion valve 3 and the refrigerant (the refrigerant which circulates in the low temperature side circuit B) and receive heat from the refrigerant.

The high temperature side, high-side pressure sensor 5 is disposed on the discharge side of the high temperature side compressor 1, and detects the pressure of the refrigerant discharged from the high temperature side compressor 1. The high temperature side, discharge gas temperature sensor 30 is disposed on the discharge side of the high temperature side compressor 1, and detects the temperature of the refrigerant discharged from the high temperature side compressor 1. The high temperature side, condenser outlet temperature sensor 31 is disposed in a passage leading from the outlet of the high temperature side condenser 2, and detects the temperature of the refrigerant flowing out of the high temperature side condenser 2. The high temperature side, low-side pressure sensor 6 is disposed on the suction side of the high temperature side compressor 1, and detects the pressure of the refrigerant drawn to the high temperature side compressor 1 by suction. The high temperature side, suction gas temperature sensor 32 is disposed on the suction side of the high temperature side compressor 1, and detects the temperature of the refrigerant drawn to the high temperature side compressor 1 by suction.

### (Low temperature side circuit B)

The low temperature side circuit B includes a low temperature side compressor 7, an intermediate cooler 8, a low temperature side condenser 9, a liquid receiver 10, a liquid pipe solenoid valve 15, a low temperature side expansion valve 16 and a low temperature side evaporator 17, which are connected in series to each other by low temperature side refrigerant pipes 52. The low temperature side circuit B also includes a low temperature side, high-side pressure sensor 11, a low temperature side, discharge gas temperature sensor 33, a low temperature side, condenser outlet temperature sensor 34, a low temperature side, low-side pressure sensor 12 and a low temperature side, suction gas temperature sensor 35.

Examples of the refrigerant which circulates in the low temperature side circuit B include a carbon dioxide (CO₂) refrigerant.

The low temperature side compressor 7 is configured to draw by suction the refrigerant which flows in the low temperature side circuit B, and compress the refrigerant to a high-temperature, high-pressure state. The intermediate cooler 8 is configured to exchange heat between the refrigerant discharged from the low temperature side compressor 7 and a fluid (for example, the air, water, a refrigerant or brine) and apply heating energy to the fluid. The low temperature side condenser 9 is configured to exchange heat between the refrigerant flowing out of the intermediate cooler 8 and the fluid (the refrigerant which circulates in the high temperature side circuit A) and apply heating energy to the fluid. The liquid receiver 10 is configured to store an excess amount of refrigerant flowing out of the low temperature side condenser 9.

The liquid pipe solenoid valve 15 is configured to enable or disable the flow of the refrigerant by changing the operation state of the valve between open and closed states. The low temperature side expansion valve 16 is configured to decompress and expand the refrigerant flowing out of the liquid receiver 10. The low temperature side evaporator 17 is configured to exchange heat between the refrigerant decompressed by the low temperature side expansion valve 16 and the refrigerant (for example, the air, water, a refrigerant or brine) and receive heat from the refrigerant.

The low temperature side, high-side pressure sensor 11 is disposed on the discharge side of the low temperature side compressor 7, and detects the pressure of the refrigerant discharged from the low temperature side compressor 7. The low temperature side, discharge gas temperature sensor 33 is disposed on the discharge side of the low temperature side compressor 7, and detects the temperature of the refrigerant discharged from the low temperature side compressor 7. The low temperature side, condenser outlet temperature sensor 34 is disposed in a passage leading from the outlet of the low temperature side condenser 9, and detects the temperature of the refrigerant flowing out of the low temperature side condenser 9. The low temperature side, low-side pressure sensor 12 is disposed on the suction side of the low temperature side compressor 7, and detects the pressure of the refrigerant drawn to the low temperature side compressor 7 by suction. The low temperature side, suction gas temperature sensor 35 is disposed on the suction side of the low temperature side compressor 7, and detects the temperature of the refrigerant drawn to the low temperature side compressor 7 by suction.

### (Outdoor unit 14)

The outdoor unit 14 houses all components which form the high temperature side circuit A and a part of the low temperature side circuit B. As shown in Fig. 2, all components which form the high temperature side circuit A are housed in a high temperature side housing 19 which forms the outdoor unit 14, and a part of the low temperature side circuit B is housed in a low temperature side housing 20. The high temperature side housing 19 and the low temperature side housing 20 are preferably implemented in, for example, housings having the same outer shape. Further, the high temperature side housing 19 and the low temperature side housing 20 are placed on a common base 21 having a bottom plate shared between them. The high temperature side housing 19 and the low temperature side housing 20 are disposed adjacent to each other on the common base 21.

As described above, the high temperature side circuit A and the low temperature side circuit B are connected to each other in a cascade configuration by the cascade condenser 13. That is, the cascade condenser 13 is provided as a component common to the two circuits such that the low temperature side condenser 9 of the low temperature side circuit B serves as the high temperature side evaporator 4 of the high temperature side circuit A, and the high temperature side evaporator 4 of the high temperature side circuit A serves as the low temperature side condenser 9 of the low temperature side circuit B. The cascade condenser 13 is desirably housed in the low temperature side housing 20 to be shiftable in position from the low temperature side housing 20 to the existing high temperature side housing 19.

### (High temperature side housing 19)

The high temperature side housing 19 accommodates a high temperature side fan 22 and a high temperature side refrigerant circuit controller board 24, in addition to the high temperature side compressor 1, the high temperature side condenser 2 and the high temperature side expansion valve 3.

The high temperature side fan 22 is disposed in the upper portion of the high temperature side housing 19, and supplies the air to the high temperature side condenser 2. The high temperature side refrigerant circuit controller board 24 is connected to the high temperature side, high-side pressure sensor 5, the high temperature side, discharge gas temperature sensor 30, the high temperature side, condenser outlet temperature sensor 31, the high temperature side, low-side pressure sensor 6 and the high temperature side, suction gas temperature sensor 32. The high temperature side refrigerant circuit controller board 24 controls the rotation speed of the high temperature side compressor 1, the rotation speed of the high temperature side fan 22 and the opening degree of the high temperature side expansion valve 3, based on the pieces of information output from these sensors.

### (Low temperature side housing 20)

The low temperature side housing 20 accommodates a low temperature side fan 23 and a low temperature side refrigerant circuit controller board 26, in addition to the low temperature side compressor 7, the intermediate cooler 8 and the liquid receiver 10. As described above, the low temperature side housing 20 also accommodates the cascade condenser 13.

The low temperature side fan 23 is disposed in the upper portion of the low temperature side housing 20, and supplies the air to the intermediate cooler 8. The low temperature side refrigerant circuit controller board 26 is connected to the low temperature side, high-side pressure sensor 11, the low temperature side, discharge gas temperature sensor 33, the low temperature side, condenser outlet temperature sensor 34, the low temperature side, low-side pressure sensor 12 and the low temperature side, suction gas temperature sensor 35. The low temperature side refrigerant circuit controller board 26 controls the rotation speed of the low temperature side compressor 7 and the rotation speed of the low temperature side fan 23, based on the pieces of information output from these sensors.

The high temperature side refrigerant circuit controller board 24 disposed in the high temperature side housing 19, and the low temperature side refrigerant circuit controller board 26 disposed in the low temperature side housing 20 are connected to each other by a transmission line 36. Furthermore, the high temperature side refrigerant circuit controller board 24 and the low temperature side refrigerant circuit controller board 26 are implemented using controller boards having the same configuration.

### (Load side device 18)

The load side device 18 houses a part of the low temperature side circuit B. More specifically, the load side device 18 houses the liquid pipe solenoid valve 15, the low temperature side expansion valve 16 and the low temperature side evaporator 17. The load side device 18 is used as, for example, a showcase or a unit cooler. The liquid pipe solenoid valve 15 is used to, for example, evacuate the low temperature side circuit B or charge the refrigerant into the low temperature side circuit B.

That is, the load side device 18 has its ends on the liquid pipe side (low temperature) and the suction side (low temperature) connected to the corresponding ends in the low temperature side circuit B on site via pipes, thereby being connected to the low temperature side circuit B housed in the low temperature side housing 20.

### [Operation]

### (Operation of high temperature side circuit A)

The refrigerant as compressed by the high temperature side compressor 1 to a high-temperature, high-pressure state flows into the high temperature side condenser 2. In the high temperature side condenser 2, the refrigerant exchanges heat with the fluid (in Embodiment, the air) and condenses into a low-temperature, high-pressure refrigerant. The refrigerant flowing out of the high temperature side condenser 2 is decompressed by the high temperature side expansion valve 3 into a low-temperature, low-pressure refrigerant, and flows into the high temperature side evaporator 4 of the cascade condenser 13. In the high temperature side evaporator 4, the refrigerant exchanges heat with the fluid (in Embodiment, the refrigerant which circulates in the low temperature side circuit B) and evaporates into a high-temperature, low-pressure refrigerant. At this time, the refrigerant circulating in the low temperature side circuit B is cooled. The refrigerant flowing out of the high temperature side evaporator 4 is drawn by suction again into the high temperature side compressor 1.

### (Operation of low temperature side circuit B)

The refrigerant as compressed by the low temperature side compressor 7 to a high-temperature, high-pressure state flows into the intermediate cooler 8. In the intermediate cooler 8, the refrigerant releases heat and cools, resulting in a slight decrease in its temperature. The refrigerant cooled by the intermediate cooler 8 flows into the low temperature side condenser 9 of the cascade condenser 13. In the low temperature side condenser 9, the refrigerant exchanges heat with the fluid (in Embodiment, the refrigerant which circulates in the high temperature side circuit A) and condenses into a low-temperature, high-pressure refrigerant. At this time, the refrigerant circulating in the high temperature side circuit A is heated.

The refrigerant, upon flowing out of the low temperature side condenser 9, flows into the liquid receiver 10. One stream of the refrigerant having flowed into the liquid receiver 10 is stored as an excess amount of refrigerant, and the remaining stream is decompressed by the low temperature side expansion valve 16 into a low-temperature, low-pressure refrigerant, and flows into the low temperature side evaporator 17. In the low temperature side evaporator 17, the refrigerant exchanges heat with the fluid (in Embodiment, the air) and evaporates into a high-temperature, low-pressure refrigerant. At this time, the load side device 18 cools a cooled space. The refrigerant flowing out of the low temperature side evaporator 17 is drawn by suction again into the low temperature side compressor 7.

### [Advantageous effect of refrigeration apparatus 100]

The low temperature side refrigerant circuit controller board 26 controls the rotation speed of the low temperature side compressor 7 in accordance with the operation state of the load side device 18. For example, the low temperature side refrigerant circuit controller board 26 converts a value detected by the low temperature side, low-side pressure sensor 12 into a low temperature side evaporating temperature so as to obtain a target low temperature side evaporating temperature, thereby controlling the rotation speed of the low temperature side compressor 7.

When the load of the load side device 18 increases, the low temperature side refrigerant circuit controller board 26, for example, increases the rotation speed of the low temperature side compressor 7 to obtain a target evaporating temperature since the low-side pressure (low temperature side evaporating temperature) detected by the low temperature side, low-side pressure sensor 12 increases. In this case, the amount of heat exchange in the low temperature side condenser 9 increases. This means that the amount of heat exchange in the high temperature side evaporator 4 which exchanges heat with the low temperature side condenser 9 also increases. As a result, the low-side pressure on the high temperature side detected by the high temperature side, low-side pressure sensor 6 also increases. The high temperature side refrigerant circuit controller board 24 converts the low-side pressure detected by the high temperature side, low-side pressure sensor 6 into a high temperature side evaporating temperature so as to obtain a target high temperature side evaporating temperature, thereby controlling the rotation speed of the high temperature side compressor 1.

The intermediate cooler 8 cools a discharge gas, which is discharged from the low temperature side compressor 7, using the outside air blown by the low temperature side fan 23 in order to decrease the amount of heat exchange in the low temperature side condenser 9.

Upon this operation, since the load of the load side device 18 of the low temperature side circuit B increases, the rotation speed of the high temperature side compressor 1 is raised via the cascade condenser 13. At this time, since the pressure and temperature of the high temperature side circuit A change via the cascade condenser 13, changes in the pressure of the high temperature side circuit A (the values detected by the high temperature side, high-side pressure sensor 5 and the high temperature side, low-side pressure sensor 6) are slow. This may pose a problem that an increase in rotation speed of the high temperature side compressor 1 will be slow, the amount of heat exchange in the cascade condenser 13 will reduce, and the high-side pressure in the low temperature side circuit B will increase to the degree that the low temperature side circuit B comes to an abnormal stop. If the high temperature side circuit A and the low temperature side circuit B are controlled by only one controller, the controller must be large in size, and thus the outdoor unit 14 must, in turn, be large in size.

To combat this problem, in the refrigeration apparatus 100, five sensors disposed in the high temperature side circuit A are connected to the high temperature side refrigerant circuit controller board 24, and the high temperature side refrigerant circuit controller board 24 controls driving components of the high temperature side circuit A (the high temperature side compressor 1, the high temperature side fan 22, and the high temperature side expansion valve 3). Accordingly, in the refrigeration apparatus 100, the high temperature side refrigerant circuit controller board 24 need only have eight input and output terminals. Although all pressure and temperature states are input so as to determine the refrigeration cycle state of the high temperature side circuit A, liquid return is less likely to occur since the high temperature side circuit A is closed and the amount of refrigerant can be limited. Therefore, only the pressure (high- and low-side pressures) may be input.

Further, in the refrigeration apparatus 100, five sensors disposed in the low temperature side circuit B are connected to the low temperature side refrigerant circuit controller board 26, and the low temperature side refrigerant circuit controller board 26 controls driving components of the low temperature side circuit B (the low temperature side compressor 7 and the low temperature side fan 23). Accordingly, the low temperature side refrigerant circuit controller board 26 need only have seven input and output terminals. However, since a plurality of load side devices 18 can be connected to the low temperature side circuit B in parallel, when each low temperature side expansion valve 16 has its input terminal connected by transmission to the low temperature side refrigerant circuit controller board 26, the low temperature side refrigerant circuit controller board 26 has a total of eight (seven plus one) input and output terminals.

As described above, with the refrigeration apparatus 100, controller boards having the same configuration are used for the high temperature side refrigerant circuit controller board 24 and the low temperature side refrigerant circuit controller board 26. With this arrangement, the number of input and output terminals of the controller boards is relatively small, and the number of driving components controlled by the controller boards can be kept small. Therefore, the refrigeration apparatus 100 can use a general-purpose controller board, which can be manufactured in a compact low-cost arrangement.

Further, as described above, a problem may arise that the change in pressure of the high temperature side circuit A will be slow, an increase in rotation speed of the high temperature side compressor 1 will delay, and the low temperature side circuit B will come to an abnormal stop. However, in the refrigeration apparatus 100, the pressure and temperature of each portion are read in the high temperature side refrigerant circuit controller board 24 and the low temperature side refrigerant circuit controller board 26 so as to determine the operation states of the refrigeration cycles of the high temperature side circuit A and the low temperature side circuit B. Then, the operation information of the high temperature side circuit A and the low temperature side circuit B can be exchanged and shared with each other via the transmission line 36.

Accordingly, based on the operation information of the high temperature side circuit A and the low temperature side circuit B, the rotation speeds of the high temperature side compressor 1 and the low temperature side compressor 7 to be set next, and, where necessary, the rotation speeds of the high temperature side fan 22 and the low temperature side fan 23 to be set next can be determined. The opening degrees of the high temperature side expansion valve 3 and the low temperature side expansion valve 16 can also be determined where necessary. As described above, in the refrigeration apparatus 100, the rotation speeds of the low temperature side compressor 7 and the high temperature side compressor 1 can be determined so as to prevent the high-side pressure of the low temperature side circuit B from becoming abnormal. Hence, with the refrigeration apparatus 100, the operation states of the high temperature side circuit A and the low temperature side circuit B can be determined, and the respective driving components can be controlled optimally, thereby achieving an energy saving, optimal operation.

The refrigeration cycle state of the refrigeration apparatus 100 will be described below.
"A" in Fig. 3 represents a high temperature side, discharge gas temperature detected by the high temperature side, discharge gas temperature sensor 30.
"G" in Fig. 3 represents a high temperature side, high-side pressure (high temperature side condensing temperature) detected by the high temperature side, high-side pressure sensor 5.
"B" in Fig. 3 represents a high temperature side, condenser outlet temperature detected by the high temperature side, condenser outlet temperature sensor 31.
"J" in Fig. 3 represents a high temperature side, low-side pressure (high temperature side evaporating temperature) detected by the high temperature side, low-side pressure sensor 6.
"C" in Fig. 3 represents a high temperature side, suction gas temperature detected by the high temperature side, suction gas temperature sensor 32.
"D" in Fig. 3 represents a low temperature side, discharge gas temperature detected by the low temperature side, discharge gas temperature sensor 33.
"H" in Fig. 3 represents a low temperature side, high-side pressure (low temperature side condensing temperature) detected by the low temperature side, high-side pressure sensor 11.
"E" in Fig. 3 represents a low temperature side, condenser outlet temperature detected by the low temperature side, condenser outlet temperature sensor 34.
"K" in Fig. 3 represents a low temperature side, low-side pressure (low temperature side evaporating temperature) detected by the low temperature side, low-side pressure sensor 12.
"F" in Fig. 3 represents a low temperature side, suction gas temperature detected by the low temperature side, suction gas temperature sensor 35.
"M" in Fig. 3 represents a high temperature side, evaporator inlet temperature, which can be calculated from the high temperature side, condenser outlet temperature of "B" and the high temperature side, low-side pressure (high temperature side evaporating temperature) of "J". Accordingly, Embodiment shows an example in which no high temperature side, evaporator inlet temperature sensor is provided. Furthermore, "N" in Fig. 3 represents a low temperature side, evaporator inlet temperature, which can be calculated from the low temperature side, condenser outlet temperature of "E" and the low temperature side, low-side pressure (low temperature side, evaporating temperature) of "K". Accordingly, Embodiment illustrates an example in which no low temperature side, evaporator inlet temperature sensor is provided.

In the refrigeration apparatus 100, while the high temperature side refrigerant circuit controller board 24 and the low temperature side refrigerant circuit controller board 26 are connected to each other by the transmission line 36 to share the operation information of the high temperature side circuit A and the low temperature side circuit B, information is preferably exchanged every 10 to 30 sec, which is determined in consideration of the traffic.

Further, when there is a problem in controlling an increase in speed (rate of increase in speed) of the low temperature side compressor 7, the low temperature side circuit B may come to an abnormal stop. Accordingly, control can stabilize more reliably when the rate of change in rotation speed of the low temperature side compressor 7 is set lower than that of the high temperature side compressor 1. Control can be done more easily when an outside air temperature sensor (not shown) is provided to associate the outside air temperature with the temperature and pressure of each portion of the high temperature side circuit A and the low temperature side circuit B.

While Embodiment has described the refrigeration apparatus having the dual refrigeration cycle, the present invention is also applicable to, for example, a two-stage refrigeration apparatus. In this case, a high stage side refrigerant circuit controller board and a low stage side refrigerant circuit controller board having the same configuration are preferably disposed in the high and low stage sides, respectively, so as to transfer the high stage side refrigerant circuit controller board and the low stage side refrigerant circuit controller board. That is, the present invention is applicable to the case where a plurality of controller boards having the same configuration are provided and individually control separate driving components.

### Reference Signs List

1 high temperature side compressor 2 high temperature side condenser 3 high temperature side expansion valve 4 high temperature side evaporator 5 high temperature side, high-side pressure sensor 6 high temperature side, low-side pressure sensor 7 low temperature side compressor 8 intermediate cooler 9 low temperature side condenser 10 liquid receiver 11 low temperature side, high-side pressure sensor 12 low temperature side, low-side pressure sensor 13 cascade condenser 14 outdoor unit 15 liquid pipe solenoid valve 16 low temperature side expansion valve 17 low temperature side evaporator 18 load side device 19 high temperature side housing 20 low temperature side housing 21 common base 22 high temperature side fan 23 low temperature side fan 24 high temperature side refrigerant circuit controller board 26 low temperature side refrigerant circuit controller board 30 high temperature side, discharge gas temperature sensor 31 high temperature side, condenser outlet temperature sensor 32 high temperature side, suction gas temperature sensor 33 low temperature side, discharge gas temperature sensor 34 low temperature side, condenser outlet temperature sensor 35 low temperature side, suction gas temperature sensor 36 transmission line 51 high temperature side refrigerant pipe 52 low temperature side refrigerant pipe 100 refrigeration apparatus A high temperature side refrigerant circuit B low temperature side refrigerant circuit

## Claims

1. A refrigeration apparatus (100) comprising
a high temperature side refrigerant circuit (A) in which a high temperature side compressor (1), a high temperature side condenser (2), a high temperature side expansion valve (3) and a high temperature side evaporator (4) are connected to each other by pipes;
a low temperature side refrigerant circuit (B) in which a low temperature side compressor (7), an intermediate cooler (8), a low temperature side condenser (9), a liquid pipe solenoid valve (15), a low temperature side expansion valve (16) and a low temperature side evaporator (17) are connected to each other by pipes;
a high temperature side refrigerant circuit controller board (24) that controls at least an operation of a high temperature side fan (22) which supplies air to the high temperature side condenser (2), the high temperature side expansion valve (3), and the high temperature side compressor (1); and
a low temperature side refrigerant circuit controller board (26) that controls at least an operation of a low temperature side fan (23) which supplies air to the intermediate cooler (8), the low temperature side expansion valve (16), and the low temperature side compressor (7), wherein the high temperature side refrigerant circuit controller board (24) is connected to a high temperature side, high-side pressure sensor (5), a high temperature side, discharge gas temperature sensor (30), a high temperature side, condenser outlet temperature sensor (31), a high temperature side, low-side pressure sensor (6) and a high temperature side, suction gas temperature sensor (32),
the low temperature side refrigerant circuit controller board (26) is connected to a low temperature side, high-side pressure sensor (11), a low temperature side, discharge gas temperature sensor (33), a low temperature side, condenser outlet temperature sensor (34), a low temperature side, low-side pressure sensor (12) and a low temperature side, suction gas temperature sensor (35),
the high temperature side compressor (1), the high temperature side condenser (2), the high temperature side expansion valve (3), the high temperature side fan (22) and the high temperature side refrigerant circuit controller board (24) are disposed in a high temperature side housing (19),
the low temperature side compressor (7), the low temperature side fan (23) and the low temperature side refrigerant circuit controller board (26) are disposed in a low temperature side housing (20),
the liquid pipe solenoid valve (15), the low temperature side expansion valve (16) and the low temperature side evaporator (17) are disposed in a load side device (18), and
the high temperature side refrigerant circuit controller board (24) and the low temperature side refrigerant circuit controller board (26)
i) have an identical configuration meaning that each of the two refrigerant circuit controller boards (24, 26) has a total of eight input and output terminals, wherein the input and output terminals are connected to a fan (22, 23), an expansion valve (3, 16), a compressor (1, 7), a high-side pressure sensor (5, 11), a discharge gas temperature sensor (30, 33), a condenser outlet temperature sensor (31, 34), a low-side pressure sensor (6, 12) and a suction gas temperature sensor (32, 35);
and
ii) are connected to each other by a transmission line (36), wherein operation information of the high temperature side refrigerant circuit (A) and the low temperature side refrigerant circuit (B) is exchanged and shared with each other via the transmission line (36).

2. The refrigeration apparatus (100) of claim 1, wherein the high temperature side refrigerant circuit controller board (24) and the low temperature side refrigerant circuit controller board (26) exchange information every 10 to 30 sec.

3. The refrigeration apparatus (100) of claim 1 or 2, wherein a rotation speed of the low temperature side compressor (7) is set lower than a rotation speed of the high temperature side compressor (1).

4. The refrigeration apparatus (100) of any one of claims 1 to 3, wherein the high temperature side refrigerant circuit (A) and the low temperature side refrigerant circuit (B) are connected to each other in a cascade configuration by a cascade condenser (13) which includes the high temperature side evaporator (4) and the low temperature side condenser (9).

5. The refrigeration apparatus (100) of any one of claims 1 to 4, wherein CO₂ is used as a refrigerant for the low temperature side refrigerant circuit (B), and one of a HFC refrigerant, a HFO refrigerant and a HC refrigerant is used as a refrigerant for the high temperature side refrigerant circuit (A).

## Patentansprüche

1. Kühlvorrichtung (100), umfassend
einen hochtemperaturseitigen Kältemittelkreislauf (A), in dem ein hochtemperaturseitiger Verdichter (1), ein hochtemperaturseitiger Kondensator (2), ein hochtemperaturseitiges Expansionsventil (3) und ein hochtemperaturseitiger Verdampfer (4) durch Leitungen miteinander verbunden sind;
einen niedertemperaturseitigen Kältemittelkreislauf (B), in dem ein niedertemperaturseitiger Verdichter (7), ein Zwischenkühler (8), ein niedertemperaturseitiger Kondensator (9), ein Flüssigkeitsleitung-Solenoidventil (15), ein niedertemperaturseitiges Expansionsventil (16) und ein niedertemperaturseitiger Verdampfer (17) durch Leitungen miteinander verbunden sind;
eine hochtemperaturseitige Kältemittelkreislauf-Steuerungsplatine (24), die mindestens einen Betrieb eines hochtemperaturseitigen Lüfters (22) steuert, der dem hochtemperaturseitigen Kondensator (2), dem hochtemperaturseitigen Expansionsventil (3) und dem hochtemperaturseitigen Verdichter (1) Luft zuführt; und
eine niedertemperaturseitige Kältemittelkreislauf-Steuerungsplatine (26), die mindestens einen Betrieb eines niedertemperaturseitigen Lüfters (23) steuert, der dem Zwischenkühler (8), dem niedertemperaturseitigen Expansionsventil (16) und dem niedertemperaturseitigen Verdichter (7) Luft zuführt,
wobei die hochtemperaturseitige Kältemittelkreislauf-Steuerungsplatine (24) mit einem hochtemperaturseitigen, hochseitigen Drucksensor (5), einem hochtemperaturseitigen Abgastemperatursensor (30), einem hochtemperaturseitigen Kondensatorauslasstemperatursensor (31), einem hochtemperaturseitigen, niederseitigen Drucksensor (6) und einem hochtemperaturseitigen Sauggastemperatursensor (32) verbunden ist,
die niedertemperaturseitige Kältemittelkreislauf-Steuerungsplatine (26) mit einem niedertemperaturseitigen, hochseitigen Drucksensor (11), einem niedertemperaturseitigen Abgastemperatursensor (33), einem niedertemperaturseitigen Kondensatorauslasstemperatursensor (34), einem niedertemperaturseitigen, niederseitigen Drucksensor (12) und einem niedertemperaturseitigen Sauggastemperatursensor (35) verbunden ist,
der hochtemperaturseitige Verdichter (1), der hochtemperaturseitige Kondensator (2), das hochtemperaturseitige Expansionsventil (3), der hochtemperaturseitige Lüfter (22) und die hochtemperaturseitige Kältemittelkreislauf-Steuerungsplatine (24) in einem hochtemperaturseitigen Gehäuse (19) angeordnet sind,
der niedertemperaturseitige Verdichter (7), der niedertemperaturseitige Lüfter (23) und die niedertemperaturseitige Kältemittelkreislauf-Steuerungsplatine (26) in einem niedertemperaturseitigen Gehäuse (20) angeordnet sind,
das Flüssigkeitsleitung-Solenoidventil (15), das niedertemperaturseitige Expansionsventil (16) und der niedertemperaturseitige Verdampfer (17) in einer lastseitigen Einrichtung (18) angeordnet sind, und
die hochtemperaturseitige Kältemittelkreislauf-Steuerungsplatine (24) und die niedertemperaturseitige Kältemittelkreislauf-Steuerungsplatine (26)
i) eine identische Konfiguration aufweisen, was bedeutet, dass jede der zwei Kältemittelkreislauf-Steuerungsplatinen (24, 26) insgesamt acht Eingangs- und Ausgangsanschlüsse aufweist, wobei die Eingangs- und Ausgangsanschlüsse mit einem Lüfter (22, 23), einem Expansionsventil (3, 16), einem Verdichter (1, 7), einem hochseitigen Drucksensor (5, 11), einem Abgastemperatursensor (30, 33), einem Kondensatorauslasstemperatursensor (31, 34), einem niederseitigen Drucksensor (6, 12) und einem Sauggastemperatursensor (32, 35) verbunden sind; und
ii) durch eine Übertragungsleitung (36) miteinander verbunden sind, wobei eine Betriebsinformation des hochtemperaturseitigen Kältemittelkreislaufs (A) und des niedertemperaturseitigen Kältemittelkreislaufs (B) über die Übertragungsleitung (36) ausgetauscht und miteinander geteilt wird.

2. Kühlvorrichtung (100) nach Anspruch 1, wobei die hochtemperaturseitige Kältemittelkreislauf-Steuerungsplatine (24) und die niedertemperaturseitige Kältemittelkreislauf-Steuerungsplatine (26) alle 10 bis 30 Sekunden Information austauschen.

3. Kühlvorrichtung (100) nach Anspruch 1 oder 2, wobei eine Drehzahl des niedertemperaturseitigen Verdichters (7) niedriger eingestellt ist als eine Drehzahl des hochtemperaturseitigen Verdichters (1).

4. Kühlvorrichtung (100) nach einem der Ansprüche 1 bis 3, wobei der hochtemperaturseitige Kältemittelkreislauf (A) und der niedertemperaturseitige Kältemittelkreislauf (B) in einer Kaskadenkonfiguration durch einen Kaskadenkondensator (13), der den hochtemperaturseitigen Verdampfer (4) und den niedertemperaturseitigen Kondensator (9) umfasst, miteinander verbunden sind.

5. Kühlvorrichtung (100) nach einem der Ansprüche 1 bis 4, wobei CO₂ als Kältemittel für den niedertemperaturseitigen Kältemittelkreislauf (B) verwendet wird und eines von einem HFC-Kältemittel, HFO-Kältemittel und HC-Kältemittel als Kältemittel für den hochtemperaturseitigen Kältemittelkreislauf (A) verwendet wird.

## Revendications

1. Appareil de réfrigération (100) comprenant :
un circuit de fluide frigorigène côté haute température (A) dans lequel un compresseur côté haute température (1), un condenseur côté haute température (2), une vanne de détente côté haute température (3) et un évaporateur côté haute température (4) sont reliés les uns aux autres par des conduites ;
un circuit de fluide frigorigène côté basse température (B) dans lequel un compresseur côté basse température (7), un refroidisseur intermédiaire (8), un condenseur côté basse température (9), une électrovanne de conduite de liquide (15), une vanne de détente côté basse température (16) et un évaporateur côté basse température (17) sont reliés les uns aux autres par des conduites ;
une carte de commande de circuit de fluide frigorigène côté haute température (24) qui commande au moins une opération d'un ventilateur côté haute température (22) qui fournit de l'air au condenseur côté haute température (2), à la vanne de détente côté haute température (3) et au compresseur côté haute température (1) ; et
une carte de commande de circuit de fluide frigorigène côté basse température (26) qui commande au moins une opération d'un ventilateur côté basse température (23) qui fournit de l'air au refroidisseur intermédiaire (8), à la vanne de détente côté basse température (16) et au compresseur côté basse température (7),
dans lequel la carte de commande de circuit de fluide frigorigène côté haute température (24) est reliée à un capteur côté haute pression et côté haute température (5), à un capteur de température de gaz d'évacuation côté haute température (30), à un capteur de température de sortie du condenseur côté haute température (31), à un capteur côté basse pression et côté haute température (6) et à un capteur de température de gaz d'aspiration côté haute température (32),
la carte de commande de circuit de fluide frigorigène côté basse température (26) est reliée à un capteur côté haute pression et côté basse température (11), à un capteur de température de gaz d'évacuation côté basse température (33), à un capteur de température de sortie du condenseur côté basse température (34), à un capteur côté basse pression et côté basse température (12) et à un capteur de température de gaz d'aspiration côté basse température (35),
le compresseur côté haute température (1), le condenseur côté haute température (2), la vanne de détente côté haute température (3), le ventilateur côté haute température (22) et la carte de commande de circuit de fluide frigorigène côté haute température (24) sont disposés dans un boîtier côté haute température (19),
le compresseur côté basse température (7), le ventilateur côté basse température (23) et la carte de commande de circuit de fluide frigorigène côté basse température (26) sont disposés dans un boîtier côté basse température (20),
l'électrovanne de conduite de liquide (15), la vanne de détente côté basse température (16) et l'évaporateur côté basse température (17) sont disposés dans un dispositif côté charge (18), et
la carte de commande de circuit de fluide frigorigène côté haute température (24) et la carte de commande de circuit de fluide frigorigène côté basse température (26)
i) ont une configuration identique, c'est-à-dire que chacune des deux cartes de commande de circuit de fluide frigorigène (24, 26) a un total de huit bornes d'entrée et de sortie, dans lequel les bornes d'entrée et de sortie sont reliées à un ventilateur (22, 23), à une vanne de détente (3, 16), à un compresseur (1, 7), à un capteur de pression côté haut (5, 11), à un capteur de température de gaz d'évacuation (30, 33), à un capteur de température de sortie du condenseur (31, 34), à un capteur de pression côté bas (6, 12) et à un capteur de température de gaz d'aspiration (32, 35) ; et
ii) sont reliées l'une à l'autre par une ligne de transmission (36), dans lequel les informations de fonctionnement du circuit de fluide frigorigène côté haute température (A) et du circuit de fluide frigorigène côté basse température (B) sont échangées et partagées entre eux par l'intermédiaire de la ligne de transmission (36).

2. Appareil de réfrigération (100) selon la revendication 1, dans lequel la carte de commande de circuit de fluide frigorigène côté haute température (24) et la carte de commande de circuit de fluide frigorigène côté basse température (26) échangent des informations toutes les 10 à 30 secondes.

3. Appareil de réfrigération (100) selon la revendication 1 ou 2, dans lequel une vitesse de rotation du compresseur côté basse température (7) est réglée plus basse qu'une vitesse de rotation du compresseur côté haute température (1).

4. Appareil de réfrigération (100) selon l'une quelconque des revendications 1 à 3, dans lequel le circuit de fluide frigorigène côté haute température (A) et le circuit de fluide frigorigène côté basse température (B) sont reliés l'un à l'autre dans une configuration en cascade par un condenseur en cascade (13) qui comprend l'évaporateur côté haute température (4) et le condenseur côté basse température (9).

5. Appareil de réfrigération (100) selon l'une quelconque des revendications 1 à 4, dans lequel le CO₂ est utilisé comme fluide frigorigène pour le circuit de fluide frigorigène côté basse température (B), et l'un parmi un fluide frigorigène HFC, un fluide frigorigène HFO et un fluide frigorigène HC est utilisé comme fluide frigorigène pour le circuit de fluide frigorigène côté haute température (A).
